(19) Europäisches Patentamt

European Patent Office

Office européen des brevets

(11) EP 1 104 944 A2

(12) EUROPEAN PATENT APPLICATION

(43) Date of publication:
06.06.2001 Bulletin 2001/23

(51) Int Cl.⁷: H01S 3/225, H01S 3/134

(21) Application number: 00124276.7

(22) Date of filing: 13.11.2000

(84) Designated Contracting States:
AT BE CH CY DE DK ES FI FR GB GR IE IT LI LU
MC NL PT SE TR
Designated Extension States:
AL LT LV MK RO SI

(30) Priority: 17.11.1999 JP 32695199

(71) Applicants:
• Ushio Research Institute of Technology, Inc.
Tokyo 105-0014 (JP)

• NEC Corporation
Minato-ku, Tokyo 108-0014 (JP)

(72) Inventors:
• Saito, Takashi
Gotenba-shi, Shizuoka 412-0038 (JP)
• Watanabe, Hidenori
Gotenba-shi, Shizuoka 412-0038 (JP)

(74) Representative: VOSSIUS & PARTNER
Siebertstrasse 4
81675 München (DE)

(54) **Excimer laser apparatus**

(57) An excimer laser apparatus having a laser pulse width detecting device to avoid a short-pulse operation exerting a significant influence upon the lifetime of a lens system. The excimer laser apparatus has a laser pulse shape detecting device for detecting the laser pulse shape of laser light by receiving a part of the laser light. A laser pulse width calculating device calculates the laser pulse width of the laser light on the basis of laser pulse shape data from the laser pulse shape detecting device. A control device outputs an abnormality signal when it is judged from laser pulse width data from the laser pulse width calculating device that the laser pulse width is shorter than a predetermined length.

FIG. 1

**Description**

The present invention relates to excimer laser apparatus and, more particularly, to excimer laser apparatus for use in exposure (lithography) processes, e.g. ArF excimer laser apparatus.

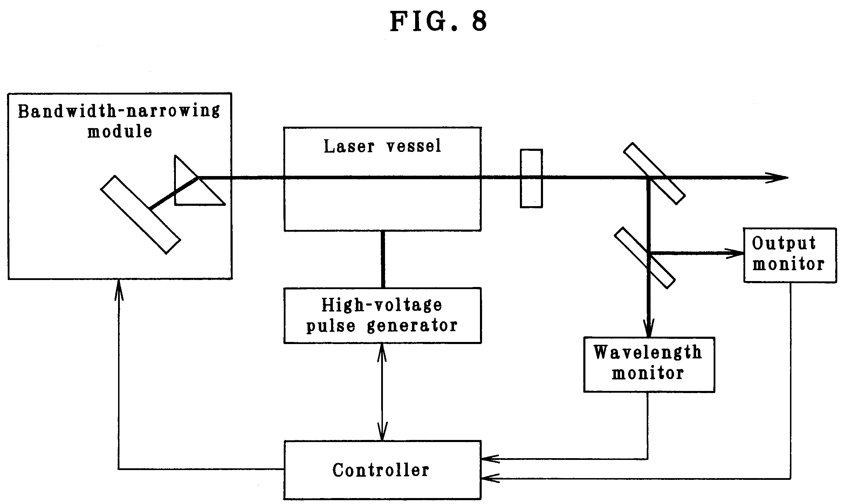

At present, a narrow-band KrF excimer laser having an oscillation wavelength at 248 nm is used as a light source for exposure. Fig. 8 shows the arrangement of a conventional narrow-band KrF excimer laser apparatus. The conventional narrow-band KrF excimer laser apparatus includes a laser vessel having a laser medium sealed therein and a high-voltage pulse generator for generating a high voltage to excite the laser medium. The conventional laser apparatus further includes a bandwidth-narrowing module for narrowing the bandwidth of laser light to 1 pm or less, together with an output monitor and a wavelength monitor.

To obtain laser light of desired wavelength in the conventional laser apparatus, the laser output wavelength is detected with the wavelength monitor, and a wavelength selecting device in the bandwidth-narrowing module is driven under control on the basis of the detected wavelength data, thereby stabilizing the laser output wavelength. Further, to obtain a constant output, the laser output is detected with the output monitor, and the charging voltage applied to the high-voltage pulse generator is controlled according to the detected laser output, thereby stabilizing the laser output. Furthermore, when it becomes impossible to maintain the desired laser output by the above-described control, a halogen gas is injected into the laser vessel, thereby allowing an operation of extended lifetime.

This will be described below in more detail. Laser gases used in excimer laser apparatus, e.g. ArF excimer laser apparatus, KrF excimer laser apparatus, and fluorine laser apparatus, contain a halogen gas, which is highly reactive. To operate an excimer laser apparatus, an electric discharge is generated between electrodes in the laser vessel filled with a laser gas to excite the laser gas. As the operation time elapses, the halogen gas contained in the laser gas is consumed owing, for example, to a chemical reaction between the electrode material and the halogen gas caused by the electric discharge. Accordingly, the laser output reduces gradually.

To compensate for the reduction in laser output, the above-described charging voltage control is performed. The laser output is obtained by excitation of the laser gas filled in the laser vessel caused by supplying the discharge space in the laser vessel with electric energy stored in a capacitor mounted in the high-voltage pulse generator. As the charging voltage applied to the capacitor is increased, the resulting laser output also increases.

To stably maintain the laser output at a constant value, the laser output is monitored with the output monitor, and the charging voltage applied to the capacitor in the high-voltage pulse generator is controlled through a controller on the basis of a signal from the output monitor. In this control, the charging voltage is increased according as the laser output reduces.

When the charging voltage reaches a certain upper limit in the high-voltage pulse generator, it becomes impossible to perform the above-described control for maintaining the laser output at a constant value any more.

In this case, a halogen gas is injected into the laser vessel to make up the loss of halogen gas due to consumption. Consequently, the laser output is restored, and the charging voltage can be reduced. Thus, it becomes possible to perform the charging voltage control again.

In this way, the control for stably maintaining the laser output at a constant value can be continued for a long period of time.

Incidentally, the conventional KrF excimer laser apparatus has heretofore been used as an exposure (lithography) light source for the manufacture of semiconductor devices by performing the above-described output control and wavelength control using the output monitor and the wavelength monitor. However, the ArF excimer laser of wavelength 193 nm and the $F_2$ laser of wavelength 157 nm, which are regarded as next-generation light sources for semiconductor lithography, involve the problem that because of shorter wavelengths, quartz used in the lens system of a stepper is damaged to a considerable extent, resulting in a reduction in lifetime of the lens system. Damage to quarts includes color-center formation due to two-photon absorption and a compaction (an increase in refractive index). The former appears as a reduction in transmittance, and the latter as a reduction in resolution of the lens system. The influence of the damage is in inverse proportion to the laser pulse width ($T_{is}$), which is defined by the following equation, when the laser pulse energy is assumed to be constant:

$$T_{is}=(\int T\,(t)dt)^2/\int\,(T(t))^2 dt \qquad\qquad ...(1)$$

where T(t) is a temporal laser pulse shape.

Let us describe the definition of the laser pulse width $T_{is}$. Assuming that an optical element is damaged by two-photon absorption, because the damage is proportional to the square of the laser light intensity, the damage D accumulated per pulse is given by

$$D=k \cdot \int (P(t))^2 dt \qquad \qquad ...(2)$$

where k is a constant determined by a substance, and P(t) is a temporal laser intensity (MW).

The laser intensity P(t) may be separated into time and energy by the following equation:

$$P(t)=I \cdot T(t)/\int T(t')dt' \qquad \qquad ...(3)$$

where I is energy (mJ), and T(t) is a temporal laser pulse shape.

Temporally integrating P(t) gives I. In the case of ArF excimer laser, I is 5 mJ, for example.

If Eq. (3) is substituted into Eq. (2), the damage D is expressed by

$$D=k \cdot I^2 \cdot \int (T(t)/\int T(t')dt')^2 dt = k \cdot I^2 \cdot \int (T(t))^2 dt/ (\int T(t)dt)2 \qquad \qquad ...(4)$$

Substituting Eq. (1) into Eq. (4), we obtain

$$D=k \cdot I^2/T_{is} \qquad \qquad ...(5)$$

From Eq. (5), the pulse width $T_{is}$, which is in inverse proportion to the damage D, is defined by Eq. (1) because $k \cdot I2$ is constant (I is maintained at a constant value).

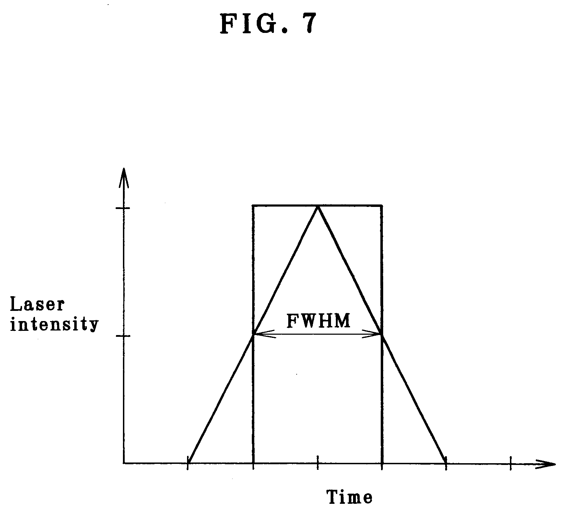

There have heretofore been cases where the laser pulse width is defined by the full width at half maximum (FWHM) of the temporal laser pulse shape. When the laser pulse width is defined by the full width at half maximum, different temporal laser pulse shapes may become equal to each other in laser pulse width as shown in the model diagram of Fig. 7. In the example shown in Fig. 7, however, the actual laser pulse durations of the two temporal laser pulse shapes are different from each other. That is, the pulse duration of the triangular laser pulse shape is longer than that of the rectangular laser pulse shape. Meanwhile, in the case of the laser pulse width $T_{is}$ defined by Eq. (1), the laser pulse width $T_{is}$ of the triangular laser pulse shape shown in Fig. 7 is longer than that of the rectangular laser pulse shape. In the example shown in Fig. 7, for instance, the laser pulse width $T_{is}$ of the triangular laser pulse shape is twice as long as the laser pulse width $T_{is}$ of the rectangular laser pulse shape.

As has been stated above, the reduction in transmittance due to two-photon absorption and the reduction in resolution due to a compaction are in inverse proportion to the laser pulse width $T_{is}$, which is given by Eq. (1), when the laser pulse energy is assumed to be constant. Therefore, it is desired that the laser pulse width be extended.

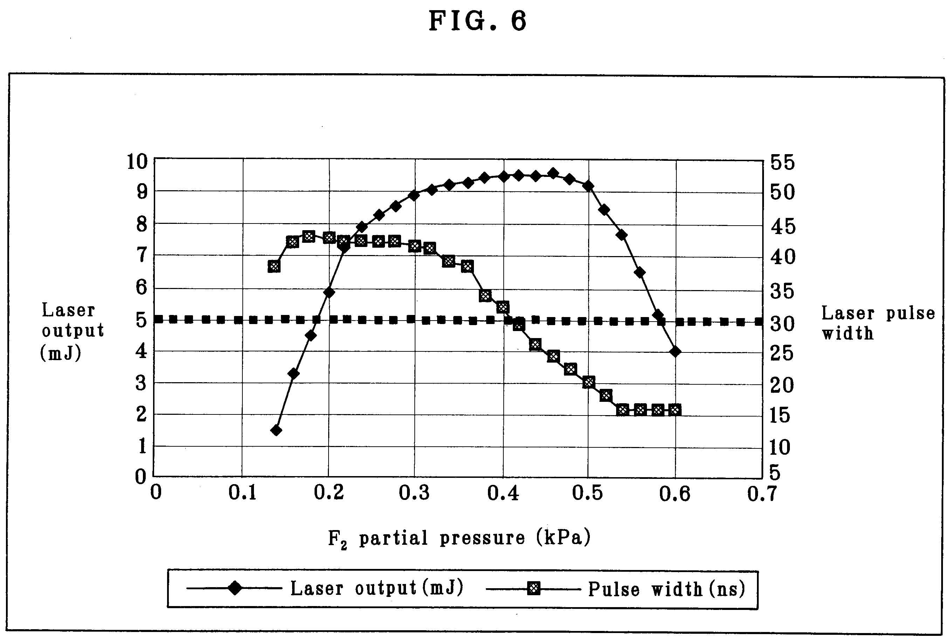

Fig. 6 is a diagram showing the laser pulse width and laser output with respect to the $F_2$ partial pressure in the ArF excimer laser. In the case of control for maintaining the laser output at a constant value of 5 mJ, in general, the lifetime of the lens system is satisfactorily guaranteed as long as the laser pulse width is 30 ns or more. However, as will be clear from Fig. 6, the respective optimum values of the laser output and the laser pulse width with respect to the $F_2$ partial pressure are widely different from each other. More specifically, a laser output of 5 mJ can be taken out until the $F_2$ partial pressure reaches 0.6 kPa. Regarding the laser pulse width, however, the condition that the laser pulse width is 30 ns or more can be satisfied only when the $F_2$ partial pressure is 0.4 kPa or less.

In the conventional excimer laser apparatus, output control and wavelength control are performed by monitoring only the output and the wavelength as shown in Fig. 8. Therefore, even when the laser apparatus operates under conditions that do not meet the above-described specifications, it is impossible to recognize the situation. Thus, the conventional excimer laser apparatus suffers from the problem that even when it operates under short pulse conditions that shorten the lifetime of the lens system, this situation cannot be recognized, and hence the lifetime of the lens system is shortened.

In view of the above-described problems with the prior art, an object of the present invention is to provide an excimer laser apparatus having a laser pulse width detecting device to avoid a short-pulse operation exerting a significant influence upon the lifetime of a lens system.

To attain the above-described object, the present invention provides an excimer laser apparatus having a laser vessel in which a laser gas containing a halogen gas is sealed, and a high-voltage pulse generator for generating a high-voltage pulse discharge in the laser vessel to excite the laser gas, thereby emitting laser light. The excimer laser apparatus includes a laser pulse shape detecting device for detecting the laser pulse shape of the laser light by receiving a part of the laser light. A laser pulse width calculating device calculates the laser pulse width of the laser light on the basis of laser pulse shape data from the laser pulse shape detecting device. A control device outputs an abnormality signal when it is judged from laser pulse width data from the laser pulse width calculating device that the laser pulse width of the laser light is shorter than a predetermined length.

In this case, the excimer laser apparatus may further include a gas adjusting device for controlling the laser pulse width upon receipt of the abnormality signal by adjusting the ratio of components of the laser gas in the laser vessel and the pressure of the laser gas.

The gas adjusting device may include at least one of a device for injecting a gas containing a halogen into the laser vessel, a device for injecting a gas containing no halogen into the laser vessel, and a device for exhausting a gas from the laser vessel.

The excimer laser apparatus may further include a laser output detecting device for detecting the output of the laser light by receiving a part of the laser light. In this case, the control device controls the charging voltage applied to a capacitor mounted in the high-voltage pulse generator on the basis of laser output data from the laser output detecting device so that the laser output is kept constant. When the charging voltage has reached a predetermined value, the control device injects a gas containing a halogen gas into the laser vessel. After injecting the halogen gas, the control device performs laser pulse width control.

The excimer laser apparatus may further include a laser output detecting device for detecting the output of the laser light by receiving a part of the laser light. In this case, the control device controls the charging voltage applied to a capacitor mounted in the high-voltage pulse generator on the basis of laser output data from the laser output detecting device so that the laser output is kept constant. Every time the number of shots of the laser light reaches a predetermined value, the control device injects a halogen gas into the laser vessel. After injecting the halogen gas, the control device performs laser pulse width control.

It is desirable that the laser pulse width be a value $T_{is}$ defined by the following equation:

$$T_{is}=(\int T(t)dt)^2/\int (T(t))^2dt$$

where $T(t)$ is a temporal laser pulse shape.

The laser pulse shape detecting device may have a photomultiplier tube or a photodiode as a photoelectric conversion device.

Thus, the excimer laser apparatus according to the present invention has a laser pulse shape detecting device for detecting the laser pulse shape of laser light by receiving a part of the laser light, and a laser pulse width calculating device for calculating the laser pulse width of the laser light on the basis of laser pulse shape data from the laser pulse shape detecting device, and further a control device for outputting an abnormality signal when it is judged from laser pulse width data from the laser pulse width calculating device that the laser pulse width of the laser light is shorter than a predetermined length. Therefore, the laser pulse width will not become excessively narrow, and hence a transparent material of an optical system, e.g. quarts, will not be damaged. Accordingly, it becomes possible to use the excimer laser apparatus as an exposure light source, for example, for the manufacture of semiconductor devices for a long period of time.

Still other objects and advantages of the invention will in part be obvious and will in part be apparent from the specification.

The invention accordingly comprises the features of construction, combinations of elements, and arrangement of parts which will be exemplified in the construction hereinafter set forth, and the scope of the invention will be indicated in the claims.

Fig. 1 is a diagram showing the arrangement of an excimer laser apparatus according to a first embodiment of the present invention.

Fig. 2 is a diagram showing the arrangement of an excimer laser apparatus according to a second embodiment of the present invention.

Fig. 3 is a diagram showing the operation of the second embodiment.

Fig. 4 is a diagram showing the operation of a modification of the second embodiment.

Fig. 5 is a diagram showing the operation of a comparative example.

Fig. 6 is a diagram showing the laser pulse width and laser output with respect to the $F_2$ partial pressure in an ArF excimer laser.

Fig. 7 is a diagram for describing the laser pulse width.

Fig. 8 is a diagram showing the arrangement of a conventional narrow-band KrF excimer laser apparatus.

Embodiments of the excimer laser apparatus according to the present invention will be described below.

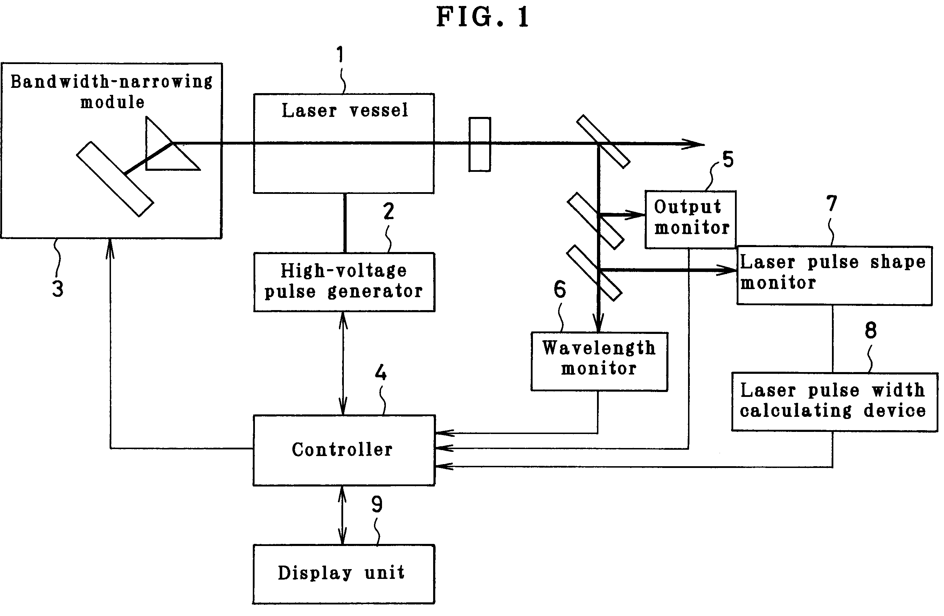

Fig. 1 shows the arrangement of a first embodiment of the present invention. An excimer laser apparatus (e. g. an ArF excimer laser apparatus) according to this embodiment has an arrangement similar to that of the conventional excimer laser apparatus. That is, the excimer laser apparatus includes a laser vessel 1 having a laser medium sealed therein and a high-voltage pulse generator 2 for generating a high voltage to excite the laser medium. The excimer laser apparatus further includes a bandwidth-narrowing module 3 for narrowing the bandwidth of laser light to 1 pm or less and a controller 4 for controlling the high-voltage pulse generator 2, the bandwidth-narrowing module 3, etc. Further, the excimer laser apparatus includes an output monitor 5 and a wavelength monitor 6. In this arrangement, a part of laser light emitted from the laser vessel 1 is branched by a beam splitter and led to the output monitor 5 and the wavelength monitor 6. The laser output is detected by the output monitor 5, and the charging voltage applied to the high-voltage pulse generator 2 is controlled through the controller 4 according to the detected laser output, thereby stabilizing the laser output at a constant value. The laser output wavelength is detected by the wavelength monitor 6, and a signal indicating the detected laser output wavelength is sent to the controller 4. The controller 4 compares the detected laser output wavelength with a desired wavelength and controls the bandwidth-narrowing module 3 on the basis of an error signal resulting from the comparison, thereby stabilizing the laser output wavelength at a constant value.

According to the present invention, a part of laser light emitted from the laser vessel 1 in the above-described arrangement is branched by a beam splitter and input to a laser pulse shape monitor 7 for detecting the laser pulse shape. A pulse shape signal obtained in the laser pulse shape monitor 7 is input to a laser pulse width calculating device 8. In the laser pulse shape monitor 7, pulse shape data is obtained by using a photoelectric converter, e.g. a photomultiplier tube or a photodiode. The laser pulse width calculating device 8 calculates the laser pulse width $T_{is}$ according to the above-described equation (1) on the basis of the pulse shape data received from the laser pulse shape monitor 7. Data concerning the pulse width $T_{is}$ calculated in the laser pulse width calculating device 8 is sent to the controller 4. When the controller 4 judges that the calculated pulse width $T_{is}$ is less than a predetermined value, e.g. 30 ns, an alarm is displayed on a display unit 9, or an alarm signal (not shown) is output to the outside.

In this embodiment, the laser pulse width can be monitored periodically. Therefore, even if the laser pulse width becomes unfavorably short owing, for example, to the injection of a halogen, as has been stated above in regard to the prior art, this situation can be detected, and it is possible to display information indicating abnormality. It is also possible to avoid an operation under short-pulse conditions by adjusting the partial pressure of $F_2$ in the laser gas on the basis of the result of the detection through laser gas replacement or the like.

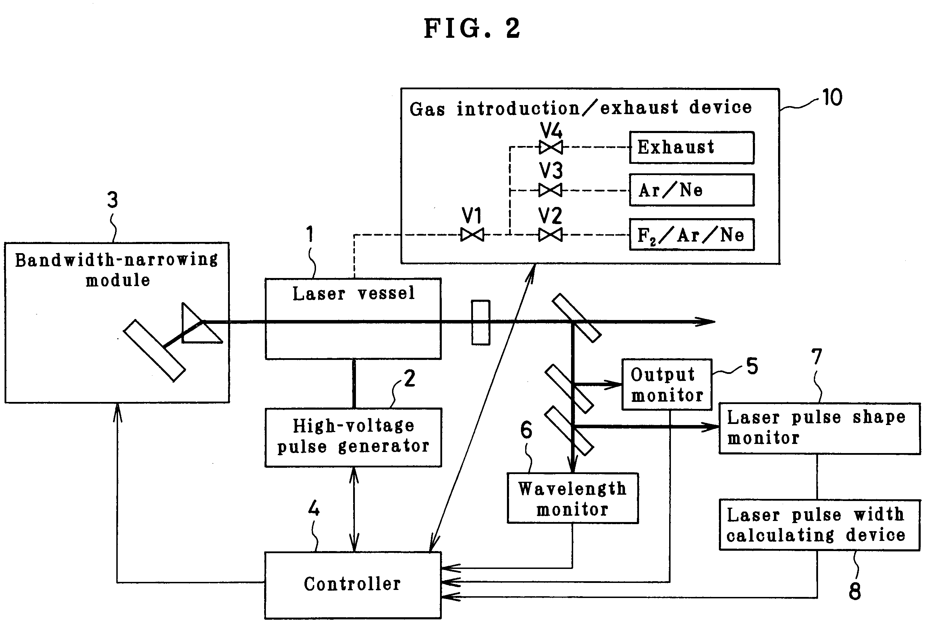

Fig. 2 shows the arrangement of a second embodiment of the present invention. An ArF excimer laser apparatus according to this embodiment has a gas injection/exhaust device 10 for injecting and exhausting gas in addition to the laser pulse shape monitor 7 for detecting the laser pulse shape and the laser pulse width calculating device 8. The gas injection/exhaust device 10 is controlled by the controller 4. The controller 4 controls the open-close operation of each of valves V1 to V4 in the gas injection/exhaust device 10, thereby controlling the injection and exhaust of gas into and from the laser vessel 1. Although the display unit 9 in Fig. 1 is not illustrated in Fig. 2, it may be either provided or omitted.

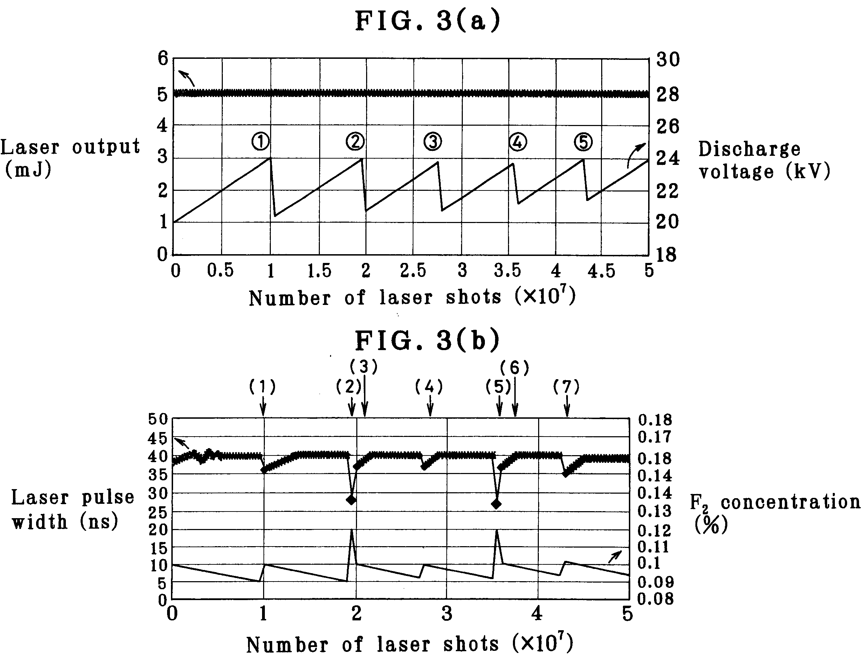

The operation of the embodiment shown in Fig. 2 will be described below. Fig. 3 is a diagram showing the operation of the second embodiment. Part (a) of Fig. 3 is a diagram in which the discharge voltage and the laser output are plotted against the number of laser shots. Part (b) of Fig. 3 is a diagram in which the laser pulse width and the fluorine ($F_2$) concentration are plotted against the number of laser shots.

In this embodiment, the control for maintaining the laser output at a constant value is performed as described below. The controller 4 controls the charging voltage applied to the capacitor mounted in the high-voltage pulse generator 2 on the basis of laser output data received from the output monitor 5. More specifically, because the laser output reduces according as the number of laser shots increases, the charging voltage is increased so that the laser output value is restored to the previous output value. For example, during the time period between the instant when the number of laser shots is zero and the instant when the number of laser shots reaches a peak ① in part (a) of Fig. 3, the discharge voltage increases linearly, whereas the laser output is kept at a constant value of 5 mJ.

When the charging voltage reaches a certain upper limit in the high-voltage pulse generator 2, it becomes impossible to perform the above-described control for maintaining the laser output at a constant value any more. At this time, the controller 4 opens the valves V1 and V2 in the gas injection/exhaust device 10 to inject a mixed gas of fluorine ($F_2$), argon (Ar) and neon (Ne) into the laser vessel 1 from a gas cylinder filled with the mixed gas. It should be noted that the pressure in the gas cylinder has been set higher than the pressure in the laser vessel 1. After a predetermined period of time has elapsed, the controller 4 closes the valves V1 and V2.

In other words, the halogen gas is injected into the laser vessel 1 to make up the loss of halogen gas due to consumption. Thus, the laser output is restored to the previous level. Consequently, it is possible to reduce the charging voltage and becomes possible to perform the charging voltage control again.

The vicinities of ① in part (a) of Fig. 3 and those of (1) in part (b) of Fig. 3 show conditions before and after the injection of halogen gas into the laser vessel 1. At ① in part (a) of Fig. 3, after the injection of halogen gas, the discharge voltage decreases as the charging voltage applied to the capacitor in the high-voltage pulse generator 2 reduces. At (1) in part (b) of Fig. 3, the concentration of fluorine ($F_2$) in the laser gas increases, which has been decreasing as the number of laser shots increases.

At (1) in part (b) of Fig. 3, the laser pulse width is larger than a predetermined value (30 ns in this case). Therefore, the above-described control for maintaining the laser output at a constant value continues as it is.

The number of laser shots further increases, and subsequently, second halogen gas injection is carried out. The vicinities of ② in part (a) of Fig. 3 and those of (2) in part (b) of Fig. 3 show conditions before and after the second injection of halogen gas into the laser vessel 1. At ② in part (a) of Fig. 3, after the injection of halogen gas, the discharge voltage decreases as the charging voltage applied to the capacitor in the high-voltage pulse generator 2 reduces, and the laser output is maintained at a constant value as in the case of the preceding process. At (2) in part (b) of Fig. 3, the concentration of fluorine ($F_2$) in the laser gas increases, which has been decreasing as the number of laser shots increases.

At (2) in part (b) of Fig. 3, the laser pulse width is shorter than 30 ns. This is owing to an increase in the partial pressure of fluorine ($F_2$) in the laser vessel 1 due to the injection of an excessively large amount of mixed gas into the laser vessel 1 from the gas cylinder. More specifically, at this time, the laser pulse width is shorter than a predetermined value although the laser output is maintained at a constant value as shown in part (a) of Fig. 3. As has been stated in regard to the prior art, in the conventional laser apparatus, only the laser output is monitored. Therefore, the situation in which the laser pulse width is shorter than a predetermined value continues undesirably, resulting in a reduction in lifetime of an optical lens made of quartz, which is used in a stepper.

At this time, the controller 4 judges that the laser pulse width is shorter than 30 ns from laser pulse width data received from the laser pulse width calculating device 8, and opens the valves V1 and V4 in the gas injection/exhaust device 10 to exhaust a part of the laser gas from the laser vessel 1. Thereafter, the controller 4 closes the valves V1 and V4. Further, the controller 4 opens the valves V1 and V3 to inject a mixed gas of argon (Ar) and neon (Ne) into the laser vessel 1 from a gas cylinder filled with the mixed gas and then closes the valves V1 and V3. It should be noted that the pressure in the gas cylinder has been set higher than the pressure in the laser vessel 1. By the described operation, the partial pressure of fluorine ($F_2$) in the laser vessel 1 is reduced.

The vicinities of ② in part (a) of Fig. 3 and those of (3) in part (b) of Fig. 3 show conditions before and after the above-described process in which a part of the laser gas is exhausted and a laser gas containing no halogen gas is injected into the laser vessel 1. At ② in part (a) of Fig. 3, the laser output is maintained at a constant value. Meanwhile, at (3) in part (b) of Fig. 3, the concentration of fluorine ($F_2$) in the laser gas decreases. However, the value of the $F_2$ concentration is larger than that before the halogen gas injection. The laser pulse width has been restored to a value more than 30 ns.

Thereafter, at ③ and ⑤ in part (a) of Fig. 3, only the halogen gas injection is carried out. At ④ in part (a) of Fig. 3, the halogen gas injection, the exhaust of a part of the laser gas and the injection of a laser gas containing no halogen gas are carried out.

As has been stated above, the control for maintaining the laser pulse width above a predetermined value is simultaneously performed in the control for maintaining the laser output at a constant value.

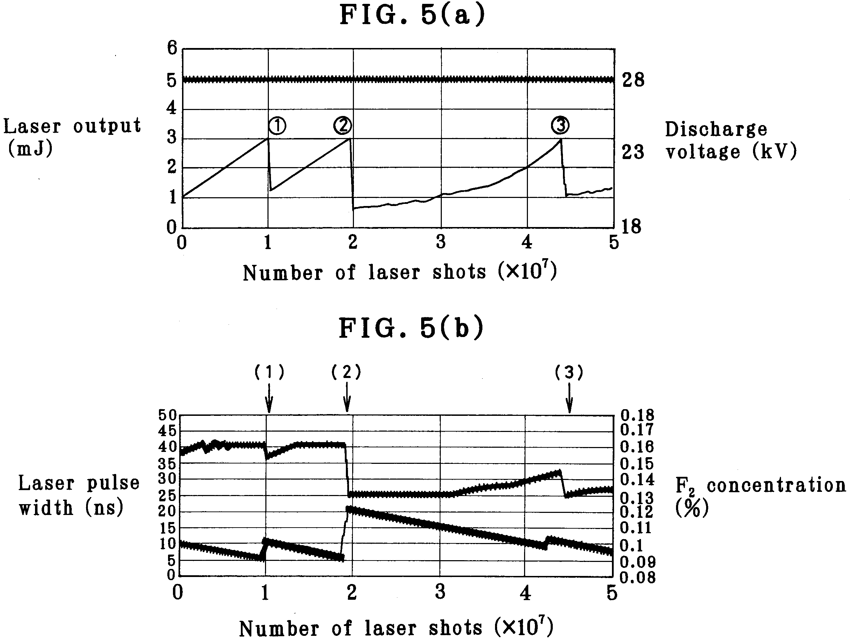

Fig. 5 shows a comparative example of an excimer laser operation taking place when charging voltage control and halogen gas injection are simply carried out without taking into consideration the laser pulse width as in the prior art. Part (a) of Fig. 5 is a diagram in which the discharge voltage and the laser output are plotted against the number of laser shots. Part (b) of Fig. 5 is a diagram in which the laser pulse width and the fluorine ($F_2$) concentration are plotted against the number of laser shots.

The vicinities of ①, ② and ③ in part (a) of Fig. 5 and those of (1), (2) and (3) in part (b) of Fig. 5 show conditions before and after the injection of halogen gas into the laser vessel. At ①, ② and ③ in part (a) of Fig. 5, after the injection of halogen gas, the laser output is restored, and the discharge voltage decreases as the charging voltage applied to the capacitor in the high-voltage pulse generator reduces. At (1), (2) and (3) in part (b) of Fig. 5, the concentration of fluorine ($F_2$) in the laser gas increases, which has been decreasing as the number of laser shots increases.

In this case, however, the control for maintaining the laser pulse width above a certain desired value is not performed. Therefore, even when the laser pulse width becomes unfavorably short at (2) in part (b) of Fig. 5 owing to an increase in the halogen partial pressure due to the injection of an excessively large amount of halogen gas, the state where the laser pulse width is unfavorably short is maintained as it is undesirably because the laser output is maintained at a constant value of 5 mJ as shown in part (a) of Fig. 5.

In the above-described embodiment, the halogen gas is injected into the laser vessel 1 when the charging voltage reaches a certain upper limit in the high-voltage pulse generator 2, thereby making up the loss of halogen gas due to consumption. However, the present invention is not necessarily limited to the described embodiment but may also be applied to an arrangement in which the charging voltage control is performed and, while doing so, a halogen gas is supplied to make up the loss due to consumption for every predetermined number of laser shots.

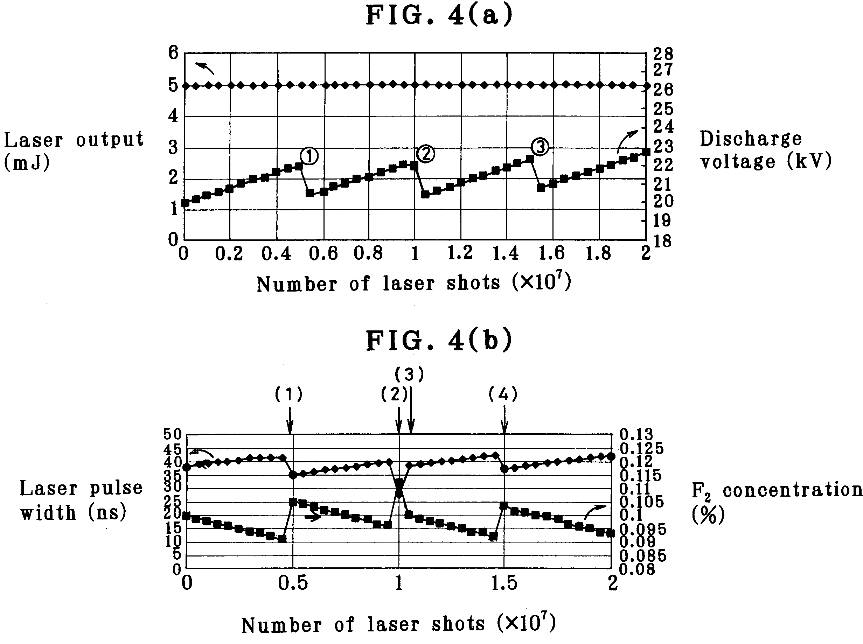

Another embodiment of the present invention will be described below with reference to Figs. 2 and 4. Fig. 4 shows the operation of this embodiment. Part (a) of Fig. 4 is a diagram in which the discharge voltage and the laser output are plotted against the number of laser shots. Part (b) of Fig. 4 is a diagram in which the laser pulse width and

the fluorine ($F_2$) concentration are plotted against the number of laser shots.

In this embodiment, the control for maintaining the laser output at a constant value is performed as described below. The controller 4 controls the charging voltage applied to the capacitor mounted in the high-voltage pulse generator 2 on the basis of output data received from the output monitor 5 as in the case of the foregoing embodiment.

Meanwhile, the controller 4 opens the valves V1 and V2 in the gas injection/exhaust device 10 for every 5,000,000 laser shots to inject a mixed gas of fluorine ($F_2$), argon (Ar) and neon (Ne) into the laser vessel 1 from a gas cylinder filled with the mixed gas and then closes the valves V1 and V2, thereby making up the loss of halogen gas due to consumption.

The vicinities of ① in part (a) of Fig. 4 and those of (1) in part (b) of Fig. 4 show conditions before and after the injection of halogen gas into the laser vessel 1. At ① in part (a) of Fig. 4, after the injection of halogen gas, the discharge voltage decreases as the charging voltage applied to the capacitor in the high-voltage pulse generator 2 reduces. At (1) in part (b) of Fig. 4, the concentration of fluorine ($F_2$) in the laser gas increases, which has been decreasing as the number of laser shots increases.

At (1) in part (b) of Fig. 4, the laser pulse width is larger than a predetermined value (30 ns in this case). Therefore, the above-described control for maintaining the laser output at a constant value continues as it is.

When the number of laser shots further increases by 5,000,000 to reach a sum total of 10,000,000, second halogen gas injection is carried out. The vicinities of ② in part (a) of Fig. 4 and those of (2) in part (b) of Fig. 4 show conditions before and after the second injection of halogen gas into the laser vessel 1. At ② in part (a) of Fig. 4, after the injection of halogen gas, the discharge voltage decreases as the charging voltage applied to the capacitor in the high-voltage pulse generator 2 reduces, and the laser output is maintained at a constant value as in the case of the preceding process. At (2) in part (b) of Fig. 4, the concentration of fluorine ($F_2$) in the laser gas increases, which has been decreasing as the number of laser shots increases.

At (2) in part (b) of Fig. 4, the laser pulse width is shorter than 30 ns. This is owing to an increase in the partial pressure of fluorine ($F_2$) in the laser vessel 1 due to the injection of an excessively large amount of mixed gas into the laser vessel 1 from the gas cylinder. More specifically, at this time, the laser pulse width is shorter than a predetermined value although the laser output is maintained at a constant value as shown in part (a) of Fig. 4.

Therefore, the controller 4 opens the valves V1 and V4 in the gas injection/exhaust device 10 to exhaust a part of the laser gas from the laser vessel 1 and then closes the valves V1 and V4. Further, the controller 4 opens the valves V1 and V3 to inject a mixed gas of argon (Ar) and neon (Ne) into the laser vessel 1 from a gas cylinder filled with the mixed gas and then closes the valves V1 and V3. It should be noted that the pressure in the gas cylinder has been set higher than the pressure in the laser vessel 1. By the described operation, the partial pressure of fluorine ($F_2$) in the laser vessel 1 is reduced.

The vicinities of ② in part (a) of Fig. 4 and those of (3) in part (b) of Fig. 4 show conditions before and after the above-described process in which a part of the laser gas is exhausted and a laser gas containing no halogen gas is injected into the laser vessel 1. At ② in part (a) of Fig. 4, the laser output is maintained at a constant value. Meanwhile, at (3) in part (b) of Fig. 4, the concentration of fluorine ($F_2$) in the laser gas decreases. However, the value of the $F_2$ concentration is larger than that before the halogen gas injection. The laser pulse width has been restored to a value more than 30 ns.

Thus, in this embodiment also, the control for maintaining the laser pulse width above a predetermined value is simultaneously performed in the control for maintaining the laser output at a constant value.

The damage caused to the optical system in relation to the pulse width of excimer laser is owing to the accumulation of energy in an operation continued for a long period of time. By applying the present invention to the excimer laser apparatus as stated above, it becomes possible to reduce the damage to the optical system to a level at which substantially no problem arises.

The present invention is applicable not only to ArF excimer laser apparatus but also to KrF excimer laser apparatus and $F_2$ laser apparatus.

Although the excimer laser apparatus according to the present invention has been described above on the basis of the embodiments, the present invention is not limited to the foregoing embodiments but can be modified in a variety of ways.

As will be clear from the foregoing description, the excimer laser apparatus according to the present invention has a laser pulse shape detecting device for detecting the laser pulse shape of laser light by receiving a part of the laser light, and a laser pulse width calculating device for calculating the laser pulse width of the laser light on the basis of laser pulse shape data from the laser pulse shape detecting device, and further a control device for outputting an abnormality signal when it is judged from laser pulse width data from the laser pulse width calculating device that the laser pulse width of the laser light is shorter than a predetermined length. Therefore, the laser pulse width will not become excessively narrow, and hence a transparent material of an optical system, e.g. quarts, will not be damaged. Accordingly, it becomes possible to use the excimer laser apparatus as an exposure light source, for example, for the manufacture of semiconductor devices for a long period of time.

**Claims**

1. An excimer laser apparatus having a laser vessel in which a laser gas containing a halogen gas is sealed, and a high-voltage pulse generator for generating a high-voltage pulse discharge in the laser vessel to excite the laser gas, thereby emitting laser light, said excimer laser apparatus comprising:

    laser pulse shape detecting means for detecting a laser pulse shape of said laser light by receiving a part of said laser light;
    laser pulse width calculating means for calculating a laser pulse width of said laser light on a basis of laser pulse shape data from said laser pulse shape detecting means; and
    control means for outputting an abnormality signal when it is judged from laser pulse width data from said laser pulse width calculating means that the laser pulse width of said laser light is shorter than a predetermined length.

2. An excimer laser apparatus according to claim 1, further comprising:
    gas adjusting means for controlling the laser pulse width upon receipt of said abnormality signal by adjusting a ratio of components of the laser gas in said laser vessel and a pressure of said laser gas.

3. An excimer laser apparatus according to claim 2, wherein said gas adjusting means includes at least one of: means for injecting a gas containing a halogen into said laser vessel;

    means for injecting a gas containing no halogen into said laser vessel; and
    means for exhausting a gas from said laser vessel.

4. An excimer laser apparatus according to claim 1, 2 or 3 further comprising:

    laser output detecting means for detecting an output of said laser light by receiving a part of said laser light;
    wherein said control means controls a charging voltage applied to a capacitor mounted in said high-voltage pulse generator on a basis of laser output data from said laser output detecting means so that the output of said laser light is kept constant; and
    when the charging voltage has reached a predetermined value, said control means injects a gas containing a halogen gas into said laser vessel, and after injecting said halogen gas, said control means performs laser pulse width control.

5. An excimer laser apparatus according to claim 1, 2 or 3 further comprising:

    laser output detecting means for detecting an output of said laser light by receiving a part of said laser light;
    wherein said control means controls a charging voltage applied to a capacitor mounted in said high-voltage pulse generator on a basis of laser output data from said laser output detecting means so that the output of said laser light is kept constant; and
    every time a number of shots of said laser light reaches a predetermined value, said control means injects a halogen gas into said laser vessel, and after injecting said halogen gas, said control means performs laser pulse width control.

6. An apparatus according to claim 1, 2, 3, 4 or 5, wherein the laser pulse width is a value $T_{is}$ defined by the following equation:

$$T_{is}=(\int T(t)dt)^2/\int (T(t))^2 dt$$

where $T(t)$ is a temporal laser pulse shape.

7. An apparatus according to claim 1, 2, 3, 4, 5 or 6, wherein said laser pulse shape detecting means has one of a photomultiplier tube and a photodiode as photoelectric conversion means.

# FIG. 1

EP 1 104 944 A2

# FIG. 2

Gas introduction/exhaust device — 10

V4 — Exhaust
V3 — Ar/Ne
V1, V2 — $F_2$/Ar/Ne

3 — Bandwidth-narrowing module
1 — Laser vessel
2 — High-voltage pulse generator
4 — Controller
5 — Output monitor
6 — Wavelength monitor
7 — Laser pulse shape monitor
8 — Laser pulse width calculating device

EP 1 104 944 A2

# FIG. 3(a)

Laser output (mJ)    Discharge voltage (kV)

①  ②  ③  ④  ⑤

Number of laser shots (×10⁷)

# FIG. 3(b)

(1)  (2)  (3)  (4)  (5)  (6)  (7)

Laser pulse width (ns)    F₂ concentration (%)

Number of laser shots (×10⁷)

EP 1 104 944 A2

FIG. 4(a)

FIG. 4(b)

FIG. 5(a)

FIG. 5(b)

# FIG. 6

FIG. 7

# FIG. 8

EP 1 104 944 A2